# EUROPEAN PATENT APPLICATION

(11) **EP 2 270 701 A2**
(43) Date of publication of application: **05.01.2011**
(21) Application number: 10164815.2
(22) Date of filing: 03.06.2010
(51) Int. Cl.: G06F 21/00, G06Q 30/00

(54) **System and method for media distribution**

(30) Priority: 22.06.2009 US 219072 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A method for media distribution executable on a computer readable medium that, if executed by a device, causes the device to perform steps for determining whether a usage license for a media is present on the device using a distribution application stored on the computer readable medium, soliciting for the purchase of the usage license based on the usage license determination, collecting financial information from a user of the device, generating a unique device identifier using one or more parameters of the device, sending the financial information, a media identifier, and a device identifier to a server, and receiving a license key that enables the media to be fully operational on the device.

## Description

This application claims priority to U.S. Provisional Application No. 61/219,072 which was filed June 22, 2009 and which is fully incorporated herein by reference.

### BACKGROUND OF THE INVENTION

### Field of the Invention

The present invention is directed toward systems and methods for media distribution, and more particularly, some embodiments relate to media distribution using a physical medium.

### Description of the Related Art

Media such as software (e.g., computer/video games) and music are typically sold on a physical medium like an optical disc. This form of media distribution is commonly practiced, but is prone to piracy. Software and music piracy continue to increase at an alarming rate, particularly in countries with an emerging economy. To prevent or reduce piracy, most software developers require the software CD to be present in the CD drive in order for the software to fully execute or be fully functional. Still, software pirates have found ways to bypass such security measures and install unauthorized copies of games on multiple machines. Accordingly, it would be desirable to provide a technique for monitoring which and how many devices a given game has been played/installed on, and for enforcing the terms of a game license based on information regarding which devices the given game has been played on.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with a method for granting a license for a media on a computing device. The method may comprise: determining whether a usage license for the media is present on the device using the media distribution application; soliciting for the purchase of the usage license based on the usage license determination; collecting financial information from a user of the device; generating a unique device identifier using one or more parameters of the device; sending the financial information, a media identifier, and a device identifier to a server; and enabling the device full usage of the media based on a received license key. The media may comprise music, software applications, books, movies, etc.

The device identifier may be generated using on a combination of at least one user-configurable parameter and at least one non-user-configurable parameter of the device. Additionally, the device identifier may be generated by performing a hash function on the one or more device parameters. The device parameters may comprise information selected from the group consisting of device serial number, device model; machine ROM version; device bus speed; device manufacturer; device ROM release date; device ROM size; device UUID; and device service tag.

In one embodiment, the method further include the steps of: enabling the user to install and purchase usage license of one or more media from a list of available media; and allowing the device to have full functionality of one or more media in response to receiving the license key from the server.

In accordance with yet another embodiment of the invention, a computer readable medium is provided. The medium having stored thereon, computer executable instructions that, if executed by a device, cause the device to perform the method comprising: determining whether a usage license for a media is present on the device using a distribution application stored on the computer readable medium; soliciting for the purchase of the usage license based on the usage license determination; collecting financial information from a user of the device; generating a unique device identifier using one or more parameters of the device; sending the financial information, a media identifier, and a device identifier to a server; and receiving a license key that enables the media to be fully operational on the device.

The stored instructions may further cause the device to enable the user to install and purchase usage license of one or more media from a list of available media; and to allow the device to have full functionality of one or more media in response to receiving the license key from the server.

In accordance with yet another embodiment of the invention, a computer readable medium is provided. The medium having stored thereon, computer executable instructions that, if executed by a device, cause the device to perform a method comprising: receiving financial information of a user of the remote device, an identification information of a media to be licensed for operation on the remote device, and an identification information of the remote device; generating a license key based on information received from remote the device; determining whether the remote device is an originating device, wherein an originating device is a device that is first to purchase a full usage license of the media; and rewarding an account owner of the originating device for a subsequent purchase of a full usage license of the media.

The reward may comprise cash, credits, member points, and usage license of other media. In one embodiment, the reward is credited to the account owner or registered owner of the device. The stored instructions may further cause the device to perform the method of: tracking all remote devices that have purchased a full usage license of the media with a certain media identifier; and rewarding an account owner of a second device that purchased a full usage license of the media prior to a very last purchase of the full usage license.

In accordance with yet another embodiment of the invention, an apparatus for media distribution on a remote device is provided. The apparatus comprises a means for receiving financial information of a user of the remote device, an identification information of a media to be licensed for operation on the remote device, and an identification information of the remote device; means for generating a license key based on information received from remote the device; means for determining whether the remote device is an originating device, wherein an originating device is a device that is first to purchase a full usage license of the media; and means for rewarding an account owner of the originating device for a subsequent purchase of a full usage license of the media. In one embodiment, the apparatus also includes a means for tracking all remote devices that have purchased a full usage license of the media with a certain media identifier; and a means for rewarding an account owner of a second device that purchased a full usage license of the media prior to a very last purchase of the full usage license.

In accordance with yet another embodiment of the invention, there is provided an apparatus for media distribution on a remote device. The apparatus comprises: (a) means determining whether a full usage license for the media is present on the device; (b) means for soliciting for the purchase of the full usage license based on the usage license determination; (c) means for collecting financial information from a user of the device; (d) means for generating a unique device identifier using one or more parameters of the device (the device identifier being generated using a combination of at least one user-configurable parameter and at least one non-user-configurable parameter of the device); (e) means for sending the financial information, a media identifier, and a device identifier to a server; and (f) means for receiving a license key that enables the media to be fully operational on the device.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments may be employed and the described embodiments are intended to include all such aspects and their equivalents.

### BRIEF DESCRIPTION OF THE DRAWINGS

The present invention, in accordance with one or more various embodiments, is described in detail with reference to the following figures. The drawings are provided for purposes of illustration only and merely depict typical or example embodiments of the invention. These drawings are provided to facilitate the reader's understanding of the invention and shall not be considered limiting of the breadth, scope, or applicability of the invention.

FIG. 1 provides a block diagram of an exemplary system for auditing distributed software.

FIG. 2 provides a block diagram of another exemplary system for auditing distributed software, wherein the system includes an authentication server.

FIG. 3 illustrates the components of an exemplary device identifier.

FIG. 4 illustrates an exemplary environment with which the media distribution method can be implemented according to one embodiment of the present invention.

FIGS. 5-6 illustrate exemplary operational flow diagrams of media distribution methods according to one or more embodiments of the present invention.

FIGS. 7-8 illustrate exemplary computing systems with which software components can be executed to perform the media distribution method according to one or more embodiments of the present invention.

### DETAILED DESCRIPTION

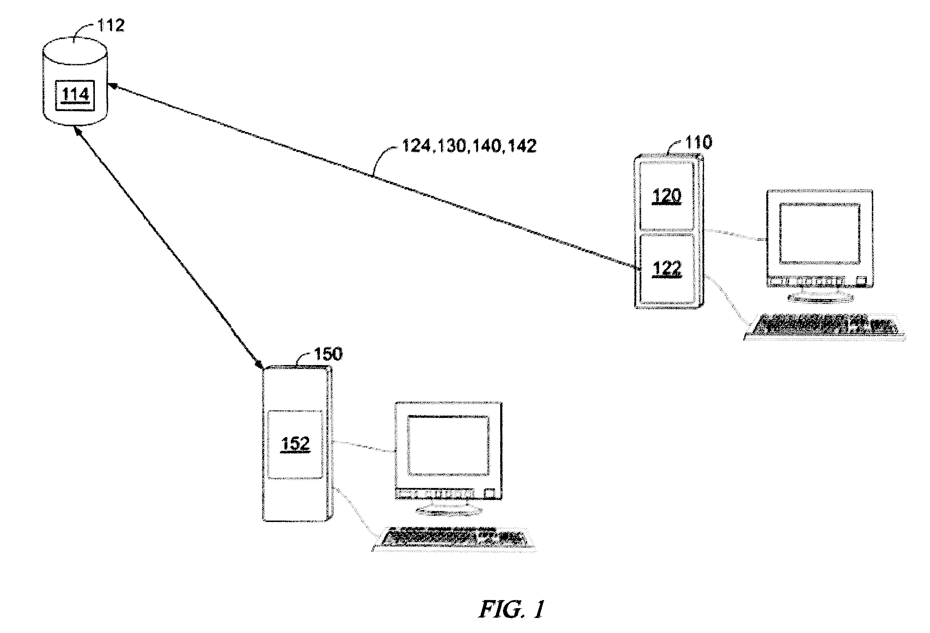

The present technology provides for an improved system and method for distributing media such as software, books, music, and movies. In accordance with one aspect of the present technology, there is provided a system and method for distributing media licenses. With reference to FIG. 1, there is provided an embodiment of a system having a plurality of computing/network devices 110 that are in operative communication with an licensing server 112. While only one computing device 110 is illustrated in FIGS. 1-2, it will be understood that a given system may comprise any number of computing devices. The computing device 110 may be, but is not limited to, a game console, a personal computer, a server computer, a laptop computer, a tablet computer, a personal digital assistant, a mobile phone, a wireless communication device, an onboard vehicle computer, or any other device capable of communication with a computer network.

The computing device 110 may contain a media (e.g., computer software, music, books, and movies) 120 that requires a license to be authorized for use. The device 110 may also comprise a licensing tool or application 122. The licensing application 122 may be any program or application that collects identifying information regarding the computing device 110 and/or any software (e.g., media 120) on the computing device 110. The licensing application 122 may comprise a stand alone application or an applet running within a web browser on the device 110 (e.g., an applet comprising executable code for a Java Virtual Machine). The licensing application 122 may be embedded in or associated with another software application, including but not limited to media 120. For example, the licensing application 122 may be embedded in or associated with a tool bar of a software application, such as, for example, a web browser. The licensing application 122 may prompt the user to register with an online software registration service, or may run in the background with little or no interaction with the user of device 110.

The licensing application 122 may include a registration routine that collects information regarding computing device 110 by checking a number of parameters which are expected to be unique to the computing device environment. The parameters checked may include, for example, hard disk volume name, user name, device name, user password, hard disk initialization date, etc... The collected information may include information that identifies the hardware comprising the platform on which the web browser runs, such as, for example, CPU number, or unique parameters associated with the firmware in use. The system information may further include system configuration information, such as amount of memory, type of processor, software or operating system serial number, etc.

Based on the collected information, the licensing application 122 may generate a device identifier 124 that is unique for the user computer 110. In the alternative, or in addition, the application 122 may gather and send the device parameters to a remote server, such as licensing server 112, which in turn generates the device identifier 124. The device identifier 124 may be stored in a hidden directory of the device 110 and/or at a remote location, such as the licensing server 112. The device identifier 124 may incorporate the device's IP address and/or other geo-location code to add another layer of specificity to device's unique identifier.

It is noted that an application (e.g., licensing application 122) running on the computing device or otherwise having access to the computing device's hardware and file system may generate a unique device identifier (e.g., device identifier 124) using a process that operates on data indicative of the computing device's configuration and hardware. The device identifier may be generated using a combination of user-configurable and non-user-configurable machine parameters as input to a process that results in the device identifier, which may be expressed in digital data as a binary number. Each machine parameter is data determined by a hardware component, software component, or data component specific to the device to which the unique identifier pertains. Machine parameters may be selected based on the target device system configuration such that the resulting device identifier has a very high probability (e.g., greater than 99.999%) of being unique to the target device. In addition, the machine parameters may be selected such that the device identifier includes at least a stable unique portion up to and including the entire identifier, that has a very high probability of remaining unchanged during normal operation of the target device. Thus, the resulting device identifier should be highly specific, unique, reproducible and stable as a result of properly selecting the machine parameters.

The application for generating the device identifier may also operate on the collected parameters with one or more algorithms to generate the device identifier. This process may include at least one irreversible transformation, such as, for example, a cryptographic hash function, such that the input machine parameters cannot be derived from the resulting device identifier. Each device identifier, to a very high degree of certainty, cannot be generated except by the suitably configured application operating or otherwise having had access to the same computing device for which the device identifier was first generated. Conversely, each identifier, again to a very high degree of certainty, can be successfully reproduced by the suitably configured application operating or otherwise having access to the same computing device on which the identifier was first generated.

The application may operate by performing a system scan to determine a present configuration of the computing device. The application may then select the machine parameters to be used as input for generating the unique device identifier. Selection of parameters may vary depending on the system configuration. Once the parameters are selected, the application may generate the identifier.

Further, generating the device identifier may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

The process of measuring carbon and silicone degradation may be accomplished by measuring a chip's ability to process complex mathematical computations, and its ability to respond to intensive time variable computations. These processes measure how fast electricity travels through the carbon. Using variable offsets to compensate for factors such as heat and additional stresses placed on a chip during the sampling process allows for each and every benchmark to reproduce the expected values. During a standard operating lifetime, the process of passing electricity through the various switches causes a computer chip to degrade. These degradations manifest as gradually slower speeds that extend the processing time required to compute various benchmarking algorithms.

In addition to the chip benchmarking and degradation measurements, the process for generating a device identifier may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device identifier values during transmission and comparisons. Such encryption processes may be used in conjunction with random sampling and key generations.

The device identifier may be generated by utilizing machine parameters associated with one or more of the following: machine model; machine serial number; machine copyright; machine ROM version; machine bus speed; machine details; machine manufacturer; machine ROM release date; machine ROM size; machine UUID; and machine service tag.

The device identifier may also be generated by utilizing machine parameters associated with one or more of the following: CPU ID; CPU model; CPU details; CPU actual speed; CPU family; CPU manufacturer; CPU voltage; and CPU external clock.

The device identifier may also be generated by utilizing machine parameters associated with one or more of the following: memory model; memory slots; memory total; and memory details.

The device identifier may also be generated by utilizing machine parameters associated with one or more of the following: video model; video details; display model; display details; audio model; and audio details.

The device identifier may also be generated by utilizing machine parameters associated with one or more of the following: network model; network address; Bluetooth address; Blackbox model; Blackbox serial; Blackbox details; Blackbox damage map; Blackbox volume name; NetStore details; and NetStore volume name.

The device identifier may also be generated by utilizing machine parameters associated with one or more of the following: optical model; optical serial; optical details; keyboard model; keyboard details; mouse model; mouse details; printer details; and scanner details.

The device identifier may also be generated by utilizing machine parameters associated with one or more of the following: baseboard manufacturer; baseboard product name; baseboard version; baseboard serial number; and baseboard asset tag.

The device identifier may also be generated by utilizing machine parameters associated with one or more of the following: chassis manufacturer; chassis type; chassis version; and chassis serial number.

The device identifier may also be generated by utilizing machine parameters associated with one or more of the following: IDE controller; SATA controller; RAID controller; and SCSI controller.

The device identifier may also be generated by utilizing machine parameters associated with one or more of the following: port connector designator; port connector type; port connector port type; and system slot type.

The device identifier may also be generated by utilizing machine parameters associated with one or more of the following: cache level; cache size; cache max size; cache SRAM type; and cache error correction type.

The device identifier may also be generated by utilizing machine parameters associated with one or more of the following: fan; PCMCIA; modem; portable battery; tape drive; USB controller; and USB hub.

The device identifier may also be generated by utilizing machine parameters associated with one or more of the following: device model; device model IMEI; device model IMSI; and device model LCD.

The device identifier may also be generated by utilizing machine parameters associated with one or more of the following: wireless 802.11; webcam; game controller; silicone serial; and PCI controller.

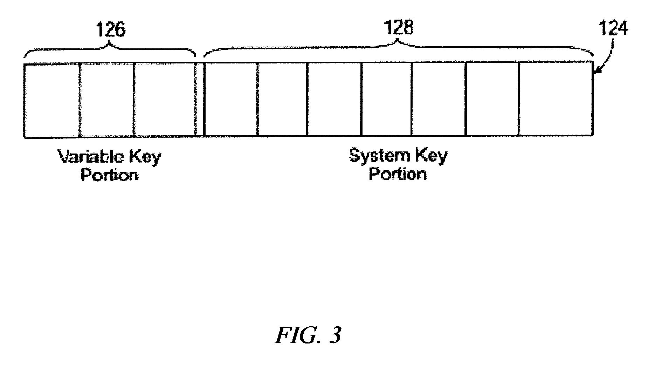

With reference to FIG. 3, in one embodiment, the device identifier 124 may include two components - namely, a variable key portion 126 and a system key portion 128. The variable key portion 126 may be generated at the time of registration of computing device 110 by reference to a variable platform parameter, such as via reference to system time information, although other parameters which are variable may be utilized in other embodiments. The system key portion 128 may include the above described parameters expected to be unique to the device 110, such as, for example, hard disk volume name, user name, computer name, user password, hard disk initialization date, or combinations thereof. Portions 126 and/or 128 may be combined with the IP address and/or other platform parameters of the device 110. It is noted that device identifiers, or portions thereof, may be encrypted to add an additional layer of specificity and security.

With reference once again to FIG. 1, the licensing application 122 may also include a registration routine that collects or receives information regarding the media 120 on device 110 by checking information which is expected to be unique to media 120, such as, for example, the media serial number. The collected media identifier may include the media serial number, product identification number, product key, etc. The collected media identifier may include information regarding where the media was sold or distributed, who the buyers, sellers, and/or distributors were, which stores the media was sold in, etc. It is noted that the media identifier may be unique to particular copy of media, such as when the media is licensed to a single user. In the alternative, or in addition, the media identifier may be unique to particular type or group of a media, such as when the media is licensed to a defined group of users. It should be noted that a media may be a computer software, music, a book, or a movie.

The embodiments described herein comprise an licensing application 122 that collects the media identifier 130 for media 120; however, it will be understood that the systems and components described herein can be adapted to collect one or more types of media identifiers for a plurality of media applications. The media identifier 130 may be stored in a hidden directory of the device 110 and/or at a remote location, such as the licensing server 112.

The licensing application 122 may also include a registration routine that collects or receives information regarding the geo-location code 140 of the device 110. The geo-locater 140 may comprise the IP address or the like of the device 110.

Licensing application 122 may electronically send the device identifier 124 and the media identifier 130 to the licensing server 112. In the alternative, or in addition, a geo-location code 140, such as the IP address of the device 110, may be associated with the device identifier 124 and/or the media identifier 130 and may sent to the licensing server 112, such as via a secured network connection. The licensing server 112 may encrypt and store the data, such as the device identifier 124, the media identifier 130, and/or the geo-location code 140, received from the computing device 110. The licensing server 112 may receive such data from a plurality of computing devices and store the received data in an audit database 114.

In one embodiment, the licensing application 122 may generate an audit number 142 by associating the media identifier 130 with the device identifier 124 and/or geo-location code 140, and may send the generated audit number 142 to the licensing server 112. In another embodiment, the application 122 may send the device identifier 124, the media identifier 130, and/or the geo-location code 140 to the server 112 in a piecemeal manner. The server 112 may in turn generate the audit number 142. The licensing server 112 may receive or generate audit numbers from a plurality of computing devices and store the received audit numbers in the audit database 114.

It is noted that the audit number 142 may be generated from the device identifier 124, the media identifier 130, and/or the geo-location code 140 via any number of suitable approaches. For example, the media identifier 130 may be concatenated or linked with the device identifier 124 and/or geo-location code 140. It is also noted that the audit number 142 may be stored in a hidden directory of the device 110 and/or at a remote location, such as the licensing server 112. It is further noted that the device identifier 124, the media identifier 130, and/or the geo-location code 140 may at a later time be extracted from the audit number 142.

When a user of a computing device, including but not limited to computing device 110, installed with licensing application 122, attempts to run the media 120, the licensing application 122 in response may transmit the media identifier 130 associated with the device identifier 124 and/or the geo-location code 140 (or an audit number 142 generated from such data) to the licensing server 112, which in turn may store the received data in the audit database 114.

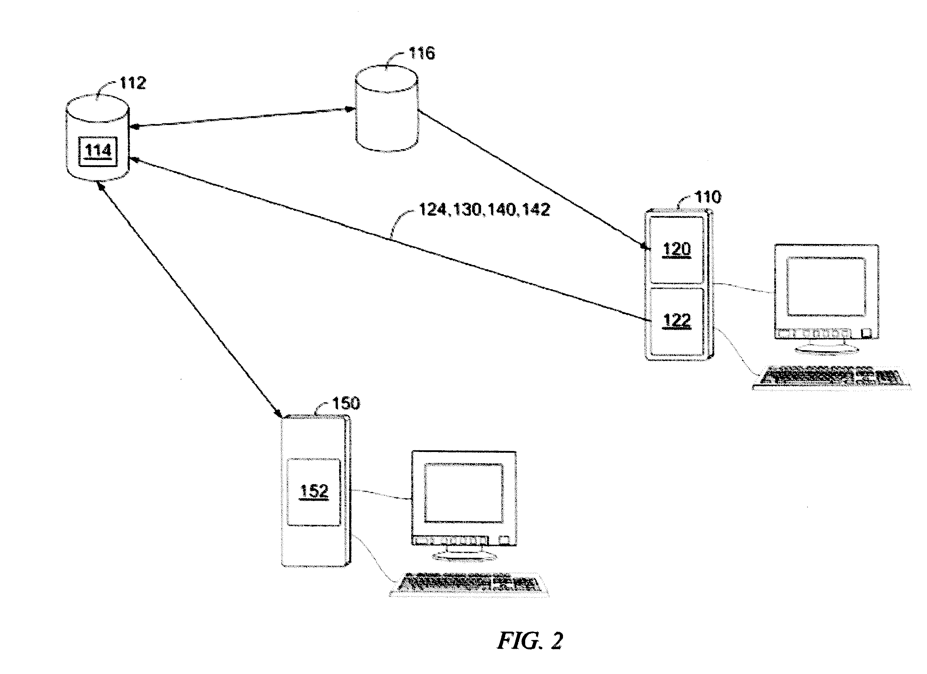

With reference to FIG. 2, there is provided an embodiment of a system that further comprises an optional authentication server 116 that is in operative communication with the licensing server 112. When a given user tries to run media 120 on his/her computing device, the authentication server 116 may access the audit database 114 on licensing server 112 to determine whether to allow his/her of the media 120. The authentication server 116 may receive/access the license terms for a particular media from the licensing server 112 or another server or computing device.

In one embodiment, the authentication server 116 may disallow use of the media 120 beyond a defined maximum number of allowed users or seats (which may be defined by the media license). The server 116 may analyze the data in the audit database 114 and determine how many seats are currently utilizing media 120. If the number of currently allowed seats meets or exceeds the maximum number of allowed seats, the server 116 may throttle or disallow the use of media 120 by more seats; otherwise, the server may allow the use of the media 120. In another embodiment, the authentication server 116 may throttle or disallow use of the media 120 if its media identifier is already associated with a different device identifier and/or a different IP address in the audit database 114; otherwise, the server 116 may allow use of the media 120. The authentication server 116 may collect data regarding the instances of allowed and disallowed media use, and may share such data with the licensing server 112.

With reference to the embodiments of FIGS. 1-2, the licensing server 112 may be in operative communication with a management device 150, which may be any device capable of communication with a computer network, such as, for example, a personal computer, a server computer, a laptop computer, a tablet computer, a personal digital assistant, a mobile phone, or a wireless communication device. The management device 150 may comprise a management application 152, which may be any program or application, such as a stand alone application or an application that is embedded or associated with another media application, such as an applet running within a web browser on the device 150.

The management application 152 may be adapted to allow a user, such as, for example, a media manufacturer or distributor, to view the data collected and stored in the audit database 114 of the audit server 112. The present embodiment will be described in the context of a media manufacturer utilizing the management application 152. However, it will be understood that any user of the management device may utilize the management application 152.

The management application 152 may present the data in the audit database 114 in a manner that allows its user to better understand how its media is being used, legitimately or otherwise. The information organized and presented according to one or more display schemes.

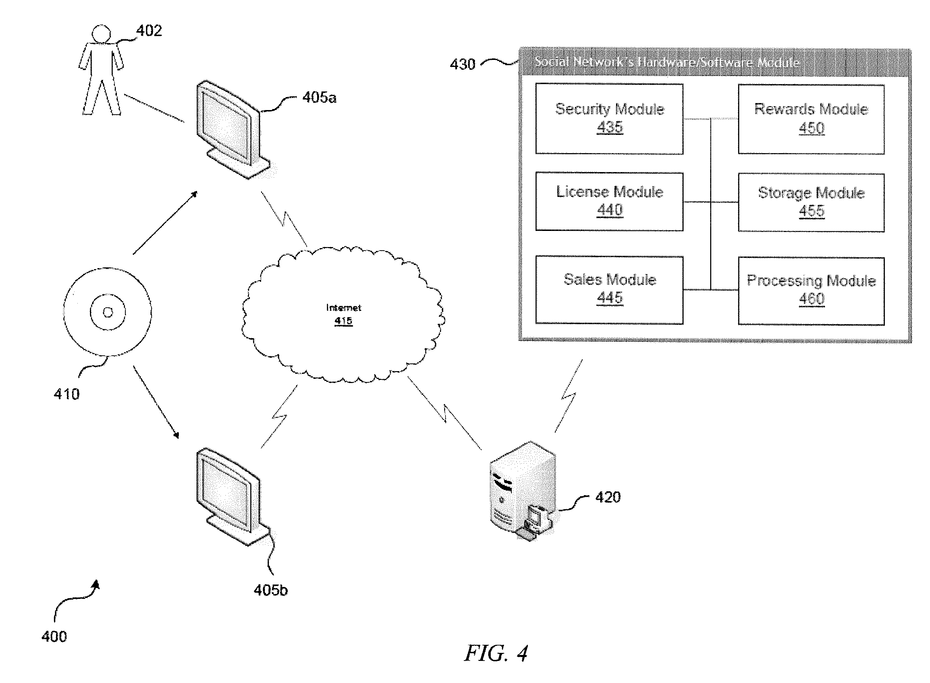

FIG. 4 is a diagram illustrating another example environment 400 with which the media distribution method, system, and apparatus is implemented according to one or more embodiments of the present invention. Referring now to FIG. 4, the illustrated example environment 400 includes users 405a and 405b, a storage medium 410, a network 415, a server 420, and a software/hardware module 430. Storage medium 410 may be an optical disc, a memory device (e.g., flash memory), a magnetic storage medium, or other storage device not yet contemplated. Storage medium 410 may contain media content such as books, music, movies, software applications, or any combination thereof. Network 415 may be the Internet, a local area network, or other form of communication network.

Storage medium 410 may be distributed free of charge to user 402. In one embodiment, medium 410 contains various software applications and music that user 402 may install on to user's computing device 405. For examples, medium 410 may contain a "xyz" action movie, as well as a computer game and soundtrack for the "xyz" action movie. Once user 402 inserts medium 410 into user's computing device (e.g., a personal computer, laptop, or gaming device), the media distribution application embedded within medium 410 will give user 402 a choice to install all of the media on medium 410 or just the computer game of the "xyz" action movie, for example. In one embodiment, each of the media on medium 410, once installed, is defaulted to a trial mode. In the trial mode, user 402 will be restricted to some of the features and functionalities of the media. For example, if a movie or a song is installed, then user 402 will only be able to view or listen to a portion of the movie or song. If the media is a computer video game, then user 402 will only be able to play a portion of the game. Alternatively or in addition, all functionalities of the media are fully accessible only for a limited number of hours or days.

In one embodiment, the media distribution application of storage medium 410 may be configured to install a portion of a media onto user's computing device 405. For example, the media distribution application may install 50% of a movie or a song. To obtain the rest of the song, user 402 is required to purchase a license and download the rest of the movie or song from server 420. In this way, storage medium 410 may be able to store more trial media for user 402 to sample.

The media distribution application may also contain a security module or application (not shown) that may include one or more features of licensing application 122. The security module may be a standalone application, a part of the media distribution application, or a part of a media to be installed on user's computing device 405. Once installed, the security module may collect information regarding user's computing device 405 that is expected to be unique to the computing device. For example, the security module may collect various parameters of the computing device such as hard disk volume name, user name, device name, hard disk initialization date, CPU number, or other unique parameters associated with the firmware being used by user's 405 device. Similar to licensing application 122, security module may generate a device identifier 124 that is unique to user's computing device 405.

Once user 402 decides to purchase a full usage license of a media, the media distribution application or the security module may instruct or cause user's computing device 405 to send the unique device identifier 124 to license server 420 via network 415.

Server 420 may comprise a license management server. Server 420 may include one or more functionalities of auditing application 112 and server 112 as discussed above. Server 420 may also include software module 430, which can also be implemented in hardware or as a combination of software and hardware. Module 430 may include a security module 435, a license module 440, a sales module 445, a rewards module 450, a storage module 455, and a processing module 460.

Security module 435 may be configured to authenticate device identifier 124 received from user's device 405. Once authenticated, sales module 445 may begin authenticating user's 405 financial data such as credit or debit card number, address, and membership number, if applicable. In one embodiment, device identifier 124 can be used as the membership number. Once user 402 has purchased a usage license for a media (e.g., xyz movie) and the payment information is verified, license module 440 may generate a license key for the media.

License module 440 may generate a license key using one or more of the received device and media identifiers. The license key may be generated in ways such that it can be authenticated by the media distribution application residing on user's computing device 405. Once the license key is authenticated by the media distribution software, the full media or full functionalities of the media will be made accessible to user 402. Alternatively, the media distribution application may direct user 402 to download the remaining portion of the media, if a full and/or completely accessible version of the media was not previously installed.

Rewards module 450 may be configured to keep track of all sales. Rewards module 450 records each purchase of a license and collects information such as purchase date, purchase price, media purchased and its identifier, user's 405 financial data, device identifier, etc. Each media contained medium 410 also has a unique media identifier. When a media is purchased, the media unique identifier may be recorded along with the device identifier. In this way, rewards module 450 may keep track of when each media is purchased and with which device using the device identifier and date purchased information. Rewards module 450 may store data it collected using storage module 455.

Reward programs can be created to reward the very first purchaser of a particular media. In an exemplary scenario, an optical disc may be distributed with a game and a movie. The optical disc may have an identifier of "lot3-CD4." Assuming further that user 402 is the first person to install the media distribution application on his computing device using the lot3-CD4 optical disc and that user 402 installs the game having a game identifier of "lot3-CD4-gamel." In this case, rewards module will record that user 402 is the very first person to purchase the lot3-CD4-gamel game. In one embodiment, user 402 may be rewarded when the game with the lot3-CD4-gamel identifier is subsequently purchased by a user with a different device identifier. In this way user 402 is encouraged to pass on the optical disc and encourages other to give the game a try. In one embodiment, for each new purchase of a license, at least one of the previous purchasers will be rewarded. Rewards may be in the form of credits, cash, or a license to use other media such as music, books, games, and movies. For example, user 402 may be rewarded with a certain number of credits or points. User 402 may convert the credits into cash or a license for another game. This form of reward system may entice users to recommend the game and thus may help increase sales of the game.

Current media distribution methods discourage users from sharing the media, particularly when the media is on a physical medium like an optical disc. Based on current systems, if user 402 lends a game disc to a friend, user 402 will be unable to play the game because most games require the disc to be in the device while playing. In the case of music, there is no incentive for users to distribute the optical disc to others because a reward system is not being implemented. In contrast, method 400 uses a reward system that encourages users to freely distribute the optical disc so others could sample the media contained therein.

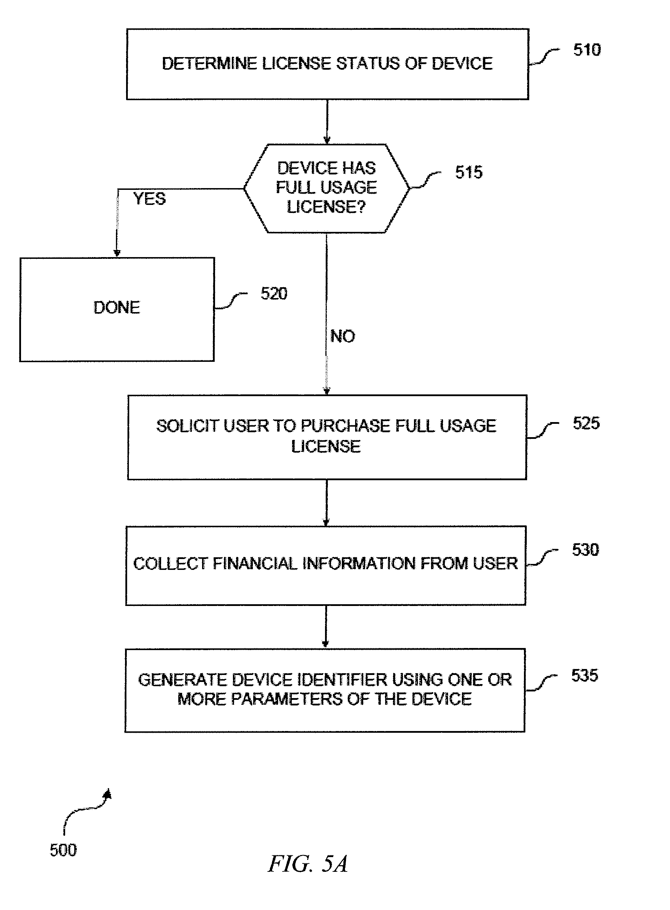

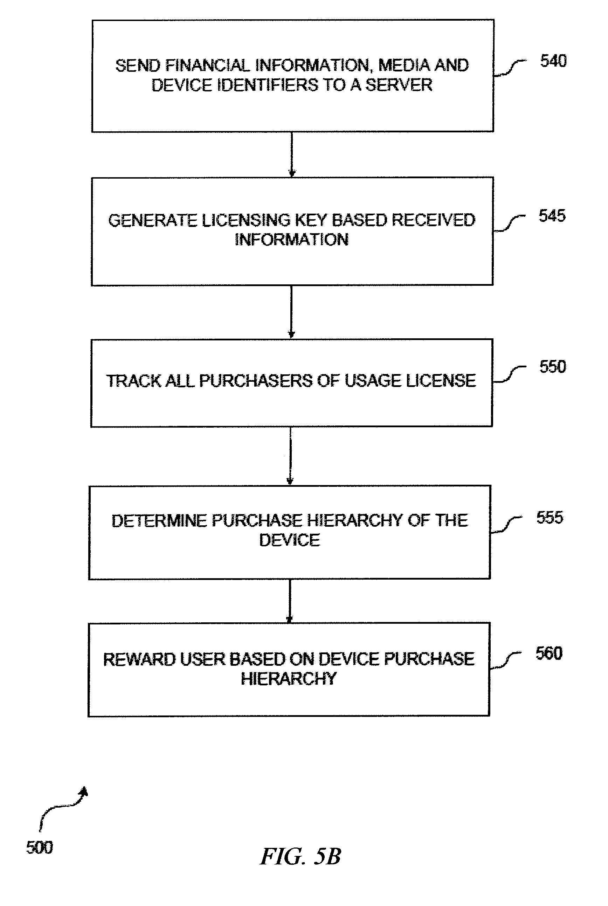

FIG. 5A illustrates an example process flow 500 of the media distribution method according to one embodiment of the present invention. Referring now to FIG. 5, method 500 starts at step 510 where the status of a license for a media is determined. Not illustrated in process flow 500, but prior to step 510, the media distribution application may be installed on user's computing device 405. The media distribution application may be made available for download or on a physical medium. Once installed, the media distribution application may check for previously installed media and determine the license status of each of the installed media (see step 515). A media may have several license statuses such as, for example: limited access, 2-week full access, or full access.

If the user already has a full usage license to a particular media, then the process is completed at step 520. Otherwise, at step 525, the media distribution application may solicit the user to purchase a full usage license for the media. Where storage medium 410 contains more than one media, then the media distribution software may check the license status of each of the media and solicit the user accordingly. As mentioned, medium 410 may contain media content such as books, music, movies, software applications, or any combination thereof.

At step 530, the media distribution application collects financial information from the user. The financial information may include a credit card number, a bank number, an address, a phone number, a social security number, and any other relevant information to verify and determine the financial status of user 402.

At step 535, the device identifier is generated using one or more parameters of the device. The device identifier may be generated using a combination of at least one user-configurable parameter and at least one non-user-configurable parameter of the device.

Referring now to FIG. 5B where process 500 continues at step 540. Once the financial data, media identifier, and device identifier are generated, user's computing device 405 may send those information to license server 420. At step 545, a license key is generated at server 420 based on at least one of the information received from the user's computing device.

At step 550, purchases of media licenses may be tracked. This may be done by sales module 445 or rewards module 450, for example. Collected data may be stored in storage module 455 or the like. At step 555, a purchase hierarchy for each device is determined. This may be done by using time stamp information collected at the time when a license for a media is purchased. A device with the earliest purchase date is deemed to have the highest purchase hierarchy, while the device with the latest purchase date will have the lowest purchase hierarchy. Rewards may then be distributed based on the user's purchase hierarchy, see step 560. For example, the user with the highest purchase hierarchy will be rewarded the most because she was the first person who has installed the media and has encouraged to others to purchase and distribute it.

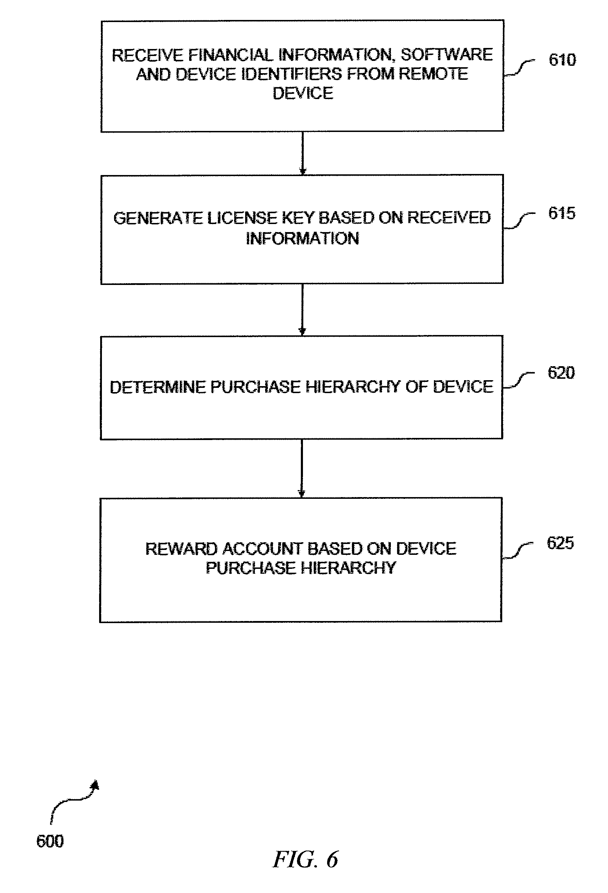

FIG. 6 illustrates an example process flow 600 of the media distribution method according to one embodiment of the present invention. Referring now to FIG. 6, method 600 starts at step 610 where financial information, media and device identifiers sent out by user's computing device 405 are received. At step 615, a license key based on one or more of the received financial information, software identifier, and device identifier is generated.

At step 620, the device purchase hierarchy is determined. This may be done using a time stamped information generated when a license is purchased. Time stamped information may be stored along with the device and software identifiers, thus allowing the data to queried when a license for a particular software is purchased and by which devices. For example there may be ten purchases of a software license from ten different devices. Using the device purchase hierarchy, one may determine which device was the first or last to purchase the software license. At step 625, a user's account is rewarded based on its ranking on the device purchase hierarchy. For example, for each purchase of a software license, the very first user may be credited ten points. Thus the user may receive more points if more people purchase the software license resulting from the sampling of the software from the storage medium 410 with which the first user had originally purchased from the store and subsequently distribute. As mentioned, the storage medium 410 may contain a variety of media, such as books, music, movies, software applications, or combinations thereof. In one embodiment, the first purchaser of storage medium 410 may be rewarded for a purchase of any media on the storage medium 410. In another related aspect, one or more of the purchasers prior to the very last purchaser may be rewarded based on his/her respective ranking on the device purchase hierarchy.

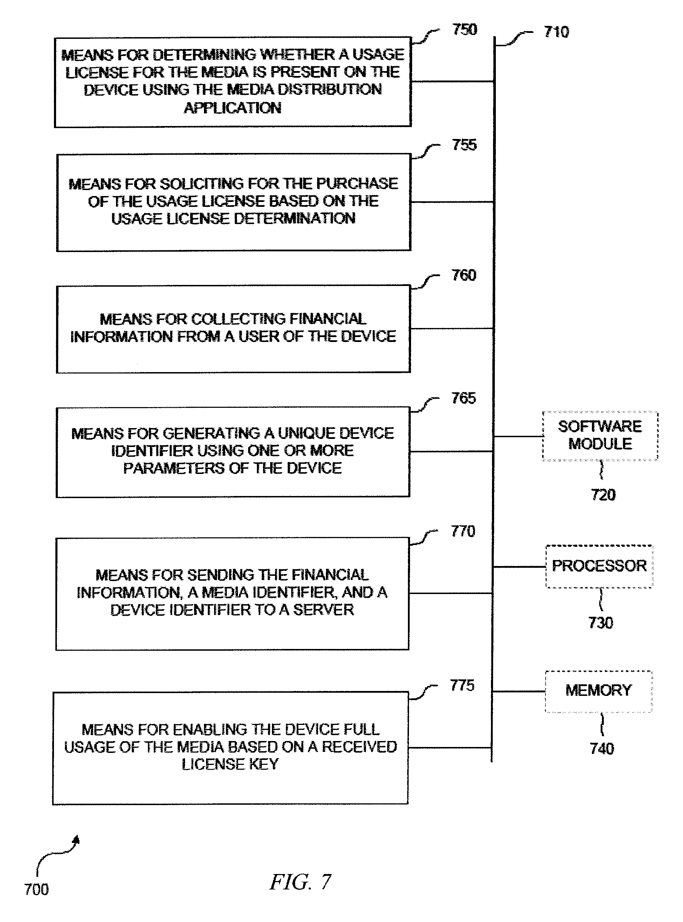

In accordance with one or more embodiments of the present invention, there are provided devices and apparatuses for distributing media. The media distribution may be done from the computing device or the user side. With reference to FIG. 7, there is provided an exemplary apparatus 700 that may be configured as either a computing device, or as a processor or similar device for use within a computing device. Alternatively, the media distribution method may be performed using computer readable instructions, stored on a physical medium, that when executed perform functions as described below with respect to apparatus 700. As illustrated, apparatus 700 may comprise a means 750 for determining whether a usage license for the software is present on the device using the media distribution application on the physical medium. Apparatus 700 may also include a means for soliciting for the purchase of the usage license based on the usage license determination. For example, if a full usage license is not found at means 750, then the media distribution may solicit the user to purchase a license by displaying picture, demo video, or a dialog box prompting the user to purchase a license.

A means 760 for collecting financial information from a user of the device and a means 765 for generating a unique device identifier using one or more parameters of the device may also be included in apparatus 700. Similar to licensing application 122, means 765 may generate a unique device identifier using one or more machine parameters from the user's device.

Apparatus 700 may also comprise a means for sending the financial information, a media identifier, and a device identifier to a server. A media identifier is a unique identifying information that is assigned to each media contained in storage medium 410. Additionally, apparatus 700 may also include a means for enabling the device full usage of the media based on a received license key. If a license key is received by user's computing device 405, it is presumed that the financial information and device identifier are authenticated and approved. A license key may be unique for a single media. Alternatively, a single license key may be enable user's 405 to fully access the entire media content of storage medium 410. This of course depends on the type of license purchased by user 402.

It is noted that apparatus 700 may optionally include a processor module 730 having at least one processor, in the case of apparatus 700 configured as computing device, rather than as a processor. Processor 730, in such case, may be in operative communication with means 750-775, and components thereof, via a bus 710 or similar communication coupling. Processor 730 may effect initiation and scheduling of the processes or functions performed by means 750-775, and components thereof.

In related aspects, apparatus 700 may include a software module 720 containing computer readable instructions to cause a device to perform means 750-775.

In further related aspects, apparatus 700 may optionally include a means for storing information, such as, for example, a memory device/module 740. Computer readable medium or memory device/module 740 may be operatively coupled to the other components of apparatus 700 via bus 710 or the like. The computer readable medium or memory device 740 may be adapted to store computer readable instructions and data for effecting the processes and behavior of means 750-775, and components thereof, or processor 730 (in the case of apparatus 700 configured as a computing device) or the methods disclosed herein.

In yet further related aspects, the memory module 740 may optionally include executable code for the processor module 730 to: (a) determine status of a media usage license; (b) solicit for the purchase of a usage license; (c) collect user's financial and personal data; (d) generate a unique device identifier using one or more parameters of user's device; (e) send financial and personal data, software identifier, and device identifier to a server; and (f) enabling the device full usage of the media based on the received license key. One or more of steps (a)-(f) may be performed by processor module 730 in lieu of or in conjunction with the means 750-775 described above.

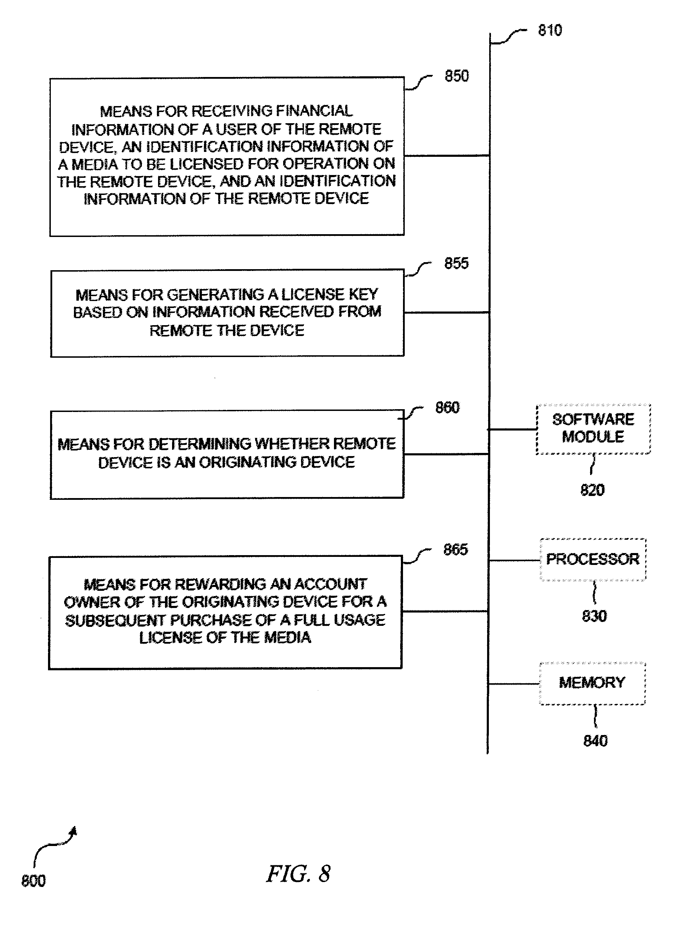

In accordance with one or more embodiments of the present invention, there are provided methods and apparatuses for distributing media. The distribution may be done on the server side. With reference to FIG. 8, there is provided an exemplary apparatus 800 that may be configured as either computing device, or as a processor or similar device for use within a computing device. Apparatus 800 may include a means 850 for receiving financial and personal information of a user of the remote device, an identification information of a media to be licensed for operation on the remote device, and an identification information of the remote device. Apparatus 800 also include a means 855 for generating a license key based on the information received from the remote the device. The license key may be generated using one or more of the media identifier, device identifier, and personal information. Although not shown, apparatus 800 may store the collected information along with a date of license purchase information.

Apparatus 800 may also comprise a means 860 for determining whether the remote device is an originating device. An originating device is a device that is first to purchase a full usage license of the media. This status may entitle its bearer to receive rewards based on subsequent sales of media having identifiers indicating that the media originated from the same physical medium (see means 865). In means 865, an account owner is rewarded for a subsequent purchase of a full usage license for a media that came from the same physical medium. In one embodiment, rewards are given when the subsequent purchase is made using a device having a different device identifier than all of the device identifiers that have previously purchased the media.

As shown in FIG. 8, apparatus 800 may optionally include a processor module 830 having at least one processor, in the case of apparatus 800 configured as computing device, rather than as a processor. Processor 830, in such case, may be in operative communication with means 850-875, and components thereof, via a bus 810 or similar communication coupling. Processor 830 may effect initiation and scheduling of the processes or functions performed by means 850-865, and components thereof.

In related aspects, apparatus 800 may include a software module 820 containing computer readable instructions to cause a device to perform means 850-865. In further related aspects, apparatus 800 may optionally include a means for storing information, such as, for example, a memory device/module 840. Computer readable medium or memory device/module 840 may be operatively coupled to the other components of apparatus 800 via bus 810 or the like. The computer readable medium or memory device 840 may be adapted to store computer readable instructions and data for effecting the processes and behavior of means 850-865, and components thereof, or processor 830 (in the case of apparatus 800 configured as a computing device) or the methods disclosed herein.

In yet further related aspects, the memory module 840 may optionally include executable code for the processor module 830 to: (a) receive financial and personal information, media and device identification information; (b) generate a license key based on one or more of the received information; (c) determine whether the device is an originating device; and (d) reward an account owner of the originating device. One or more of steps (a)-(d) may be performed by processor module 830 in lieu of or in conjunction with the means 850-865 described above.

While the present invention has been illustrated and described with particularity in terms of preferred embodiments, it should be understood that no limitation of the scope of the invention is intended thereby. Features of any of the foregoing methods and devices may be substituted or added into the others, as will be apparent to those of skill in the art. It should also be understood that variations of the particular embodiments described herein incorporating the principles of the present invention will occur to those of ordinary skill in the art and yet be within the scope of the invention.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical disks (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method for obtaining a license for use of a media on a device using a media distribution application stored on a portable medium, the method comprising:
determining whether a usage license for the media is present on the device using the media distribution application;
soliciting for the purchase of the usage license based on the usage license determination;
collecting financial information from a user of the device;
generating a unique device identifier using a combination of at least one user-configurable parameter and at least one non-user-configurable parameter of the device;
sending the financial information, a media identifier, and a device identifier to a server;
and
enabling on the device full usage of the media based on a received license key.

2. The method of claim 1, further comprising:
enabling the user to install and purchase a usage license of one or more media from a list of available media; and
allowing the device to have full functionality of one or more media in response to receiving the license key from the server.

3. The method of claim 1, wherein the device identifier is generated by performing a hash function on the one or more device parameters, wherein the device parameters comprise information selected from the group consisting of device serial number, device model, machine ROM version, device bus speed, device manufacturer, device ROM release date, device ROM size, device UUID, and device service tag.

4. A method for media distribution on a remote device comprising:
receiving financial information of a user of the remote device, identification information of a media to be licensed for operation on the remote device, and identification information of the remote device;
generating a license key based on information received from remote the device;
determining whether the remote device is an originating device, wherein an originating device is a device that is first to purchase a full usage license of the media; and
rewarding an account owner of the originating device for a subsequent purchase of a full usage license of the media.

5. The method of claim 4, wherein the rewarding step comprises providing the account owner with one or more of cash, credits, member points, and usage license of other media.

6. The method of claim 4, further comprising:
tracking all remote devices that have purchased a full usage license of the media; and
rewarding an account owner of a second device that purchased a full usage license of the media prior to a very last purchase of a full usage license of the same media.

7. The method of claim 6, wherein the second device is one or more devices having purchased a full usage license prior to the very last purchase.

8. A computer readable medium having stored thereon, computer executable instructions that, when executed by a device, cause the device to perform a method comprising steps for:
determining whether a usage license for a media is present on the device using a distribution application stored on the computer readable medium;
soliciting for a purchase of the usage license based on the usage license determination;
collecting financial information from a user of the device;
generating a unique device identifier using using a combination of at least one user-configurable parameter and at least one non-user-configurable parameter of the device;
sending the financial information, a media identifier, and a device identifier to a server;
and
receiving a license key that enables the media to be fully operational on the device.

9. The computer readable medium of claim 8, having further computer executable instructions stored thereon that, when executed by the device, cause the device to perform steps for:
enabling the user to install and purchase usage license of one or more media from a list of available media; and
allowing the device to have full functionality of one or more media in response to receiving the license key from the server.

10. The computer readable medium of claim 8, having further computer executable instructions stored thereon that, when executed by the device, cause the device to perform steps for:
tracking all remote devices that have purchased a full usage license of the media with a certain media identifier; and
rewarding an account owner of a second device that purchased a full usage license of the media prior to a very last purchase of the full usage license.

11. The computer readable medium of claim 10, wherein the second device is one or more devices having purchased a full usage license prior to the very last purchase.

12. An apparatus for media distribution on a remote device comprising:
means for receiving financial information of a user of the remote device, an identification information of a media to be licensed for operation on the remote device, and an identification information of the remote device;
means for generating a license key based on information received from remote the device;
means for determining whether the remote device is an originating device, wherein an originating device is a device that is first to purchase a full usage license of the media; and
means for rewarding an account owner of the originating device for a subsequent purchase of a full usage license of the media.

13. The apparatus of claim 12, further comprising:
means for tracking all remote devices that have purchased a full usage license of the media with a certain media identifier; and
means for rewarding an account owner of a second device that purchased a full usage license of the media prior to a very last purchase of the full usage license.

14. The apparatus of claim 12 wherein the identification information of the remote device comprises a unique device identifier generated by the apparatus using a combination of at least one user-configurable parameter and at least one non-user-configurable parameter of the device.

15. The apparatus of claim 14, wherein the at least one non-user-configurable parameter is selected from the group consisting of device serial number, device model, machine ROM version, device bus speed, device manufacturer, device ROM release date, device ROM size, device UUID, and device service tag.
